# EUROPEAN PATENT SPECIFICATION

(11) **EP 3 434 497 B1**
(45) Date of publication and mention of the grant of the patent: **02.12.2020**
(21) Application number: 18185319.3
(22) Date of filing: 24.07.2018
(51) Int. Cl.: B60C 11/12, B60C 11/03

(54) **TYRE FOR VEHICLE WHEELS**
FAHRZEUGREIFEN
PNEUMATIQUE POUR ROUES DE VEHICULES

(30) Priority: 25.07.2017 IT 201700084726
(43) Date of publication of application: 30.01.2019
(73) Proprietor: Prometeon Tyre Group S.r.l., 20126 Milano (IT)
(72) Inventor: MONTANARO, Fabio Mario, 20099 Sesto San Giovanni (MI) (IT); CAFORIO, Stefano, 23887 Olgiate Molgora (MI) (IT)
(74) Representative: Tansini, Elio Fabrizio

(56) References cited:
- EP-A2- 2 191 984
- WO-A1-2013/087440
- WO-A1-2017/040007
- US-A- 2 696 863
- US-A- 3 556 190
- US-A1- 2017 174 008

## Description

The present invention relates to a tyre for vehicle wheels, in particular for heavy duty vehicle wheels.

The expression: "heavy duty vehicle" is meant to indicate a vehicle belonging to categories M2∼M3, N2∼N3 and O2∼O4 defined in "Consolidate Resolution of the Construction of Vehicles (R.E.3) (1997)", Annex 7, pages 52-59, "Classification and definition of power-driven vehicles and trailers", like for example lorries, trucks, tractors, buses, vans and other vehicles intended for transporting heavy loads.

### PRIOR ART

EP1782970 describes a tyre the tread band of which is arranged with a three-dimensional sipe that takes the shape of a conventional groove when the tread band wears.

EP2072286 describes a tyre comprising sipes the bottom of which is designed so as to significantly improve the resistance to fatigue cracks.

EP2463121 describes a tread band having a ground imprint that changes with wearing due to the presence of "submerged" grooves, in other words formed in radially inner position with respect to the rolling surface when the tyre is new.

WO2013/087440 and EP2191984 provide exemplary tread band pattern having circumferential sipes with a first, relatively narrow portion extending from the radially outer surface of the trad band, and a second portions extending according to a constant width down to the sipe bottom portion.

US3,556,190 provides a further example of a tread band pattern having a circumferential sipe with an enlarged bottom portion.

### SUMMARY OF THE INVENTION

The following definitions apply.

The terms "radial" and "axial" and the expressions "radially inner/outer" and "axially inner/outer" are used with reference, respectively, to a direction perpendicular and to a direction parallel to the rotation axis of the tyre, whereas the terms "circumferential" and "circumferentially" are used with reference to the direction of the annular extension of the tyre, i.e. to the rolling direction of the tyre, which corresponds to a direction lying on a plane coinciding with or parallel to the equatorial plane of the tyre. Therefore:
- the term "radial direction" is meant to indicate a direction substantially perpendicular to the rotation axis of the tyre;
- the term "axial direction" is meant to indicate a direction parallel to the rotation axis of the tyre;
- the term "circumferential direction" is meant to indicate a direction parallel to the rolling direction of the tyre.

The term "groove" is meant to indicate a notch formed in the tread band of the tyre and having a width greater than 3 mm.

The term "sipe" is meant to indicate a thin notch formed in the tread band of the tyre and having, at least for a portion of its radial depth, a width not greater than 3 mm. Usually, the width of the sipe is such as to allow the complete closure of the notch when it is subjected to the pressure of the load during the passage in the footprint of the portion of tread comprising the sipe.

The term "substantially continuous extension" is meant to identify the extension of a circumferential notch, whether in the form of a groove or sipe, which extends for at least 90% of the circumferential extension along a trajectory defined by a single straight or curved line or by a broken line, where the term "broken line" is meant to indicate a line comprising two or more consecutive straight portions inclined with respect to one another.

The term "cross section" of the sipe is meant to indicate a section of the sipe taken on a plane perpendicular to the trajectory of the sipe.

The term "substantially parallel" referring to the facing walls of the sipe is meant to indicate that such walls are parallel and/or that they can be inclined with respect to one another by an angle equal to or less than 5°. Consequently, expressions like converge, diverge, convergent, divergent, referring to the facing walls of the sipe are meant to indicate inclinations between such walls greater than 5°.

The term geometric centre of the portion of maximum width of the radial section of a sipe is meant to respectively indicate, if the portion of maximum width is a segment, the middle point of such a segment, and if the portion of maximum width is a flat figure the barycentre of said flat figure.

The term "footprint" identifies the portion of tread surface in contact with the ground.

A tyre for vehicles generally comprises a carcass structure around which a tread band is circumferentially applied, after interposition of one or more belt layers.

The tread band generally has a tread pattern comprising a plurality of longitudinal and/or transversal notches, the task of which is to provide suitable drainage channels of the water and/or snow present on the travel route in the footprint, as well as of generating gripping edges that improve grip on the terrain. The amount and size of the notches in the tread pattern significantly influence different behavioural aspects of the tyre.

All tyres intended for use on heavy duty vehicles typically need optimal handling characteristics including traction, acceleration, directionality and controllability (or lateral stability), both on dry road surfaces and on wet or snow-covered road surfaces, as well as characteristics of durability, in other words the tendency to keep its functional characteristics at satisfactory levels for a long as possible.

In heavy duty vehicles, a particular segment of the market, called *Highway,* is that of tyres intended for long journeys on highways and freeways. A particular interest in such a segment is that of allowing low fuel consumption thanks to high smoothness of movement, in other words low rolling resistance.

Other market segments are so-called *Regional* (tyres intended for medium distances), *City* (tyres intended for use mostly in the cities and suburbs) and *Winter* (tyres intended specifically for use on cold and/or snow-covered roads).

Low rolling resistance requires the use of elastomeric materials with low hysteresis and tendentially rigid, so as to limit the deformations undergone in the footprint and the consequent energy dissipation.

During travel, the tread band of the tyre is subjected to stresses that, in the passage in a footprint, cause the side walls that each delimit the notches to come towards one another and cause them to move apart when leaving the footprint. In particular, the side walls of the sipes present in the tread pattern can come towards one another until they come into mutual contact.

The Applicant has observed that this closing effect of the sipes increases the rigidity of the tread, so as to reduce the deformations of the tread portions at the moment of touching the ground. Such deformations, in the presence of the hysteresis of the compound, can be considered one of the causes of the energy dissipated by the tyre while rolling. The Applicant has identified the possibility of reducing the rolling resistance of a tyre by reducing the width of some notches in the tread pattern.

The Applicant deems it advantageous, for the purposes of limiting rolling resistance and durability, to provide a tread pattern with a reduced number of notches, having preferably reduced width.

These requirements contrast, moreover, with those deriving from the need to obtain, particularly on a wet or snow-covered road, good performance in terms of handling, which generally tend to improve with the increase in the number and width of the notches present in the tread pattern.

The Applicant has also observed that the performance of the tyre, both in terms of rolling resistance and in terms of handling, tends to change during the course of the life cycle of the tyre itself. In particular, The Applicant has noted that the deformation under load of the tread band and the consequent dissipation of power by hysteresis are at maximum at the start of the operating life of the single tyre. Thereafter, with the wearing of the tread band, both the deformation and the dissipation of power tend to decrease.

Moreover, the ageing processes of the elastomeric material tend to cause a progressive stiffening thereof that, if on the one hand can favourably reduce the rolling resistance of the tyre, on the other hand tends to cause a degradation of handling performance and of driving safety.

The wearing of the tread with the progressive reduction of the depth of the grooves also tends to reduce the deformability thereof, promoting rolling resistance but penalising handling performance, particularly on wet and/or snow-covered roads.

In accordance with the present invention, it has been found that by arranging, in the tread pattern, deep circumferential sipes having variable width along their radial extension, such as to have a portion of maximum width roughly at the half-way point of their depth, it is advantageously possible to obtain optimal smoothness of movement when the tyre is new, and to more quickly compensate for the increased rigidity of the tread band due to phenomena of ageing and wearing. The maintaining of optimal road-holding and handling characteristics is thus improved, promoting performance and reduced rolling resistance for the entire life cycle of the tread band. In particular it has been found that arranging the zone of maximum width at a height indicatively comprised between 40% and 60% of the total radial depth of the sipe makes it possible, through a mutual separation of the walls of the sipe that is localised and not excessively protracted along the radial extent thereof, to give the driver the sensation of maintaining the aforementioned performance during the useful life of the tyre whilst still keeping the maximum width measurement of the sipe within contained limits. The use of sipes having a high slenderness ratio, with a maximum width that does not exceed indicatively 2 times the minimum detectable width of the radially outer portion of the sipe, improves resistance to wear and simplifies the operations of moulding and extraction of the tyre from the mould used during vulcanisation.

The object of the present invention is a tyre for vehicle wheels, according to claim 1.

According to the Applicant, substantially constant performance in terms of smoothness of movement, in terms of handling and in terms of durability is thus promoted, by arranging in the tread pattern one or more circumferential sipes each of which has the following characteristics:
in the initial stages of life of the tyre, the mutual contact of the side walls of the sipe during passage in the footprint gives satisfactory characteristics of low rolling resistance,
as consumption and ageing progress, indicatively when close to about half-way through the life of the tread band, the sipe can remain open during passage in the footprint, so as to promote characteristics of handling and road-holding in the wet, compensating for the loss of grip deriving from the stiffening of the compound by ageing and wear,
as wearing progresses further towards the end of the life of the tread band, there are no sudden reductions in handling performance

One or more of the following preferred characteristics can also be foreseen. Preferably, in the portion of maximum width the side walls of the sipe have rectilinear extension up to respective end points equidistant from said geometric centre.

Preferably, the first zone extends radially towards the rotation axis of the tyre up to a depth comprised between 25% and 40% of the total depth of the circumferential sipe. The reliance on the closure of the sipe for low rolling resistance is thus optimised, until the compacting, ageing and wearing of the tyre cause a reduction in deformability of the tread band such as to compensate for the lack of closure of the sipe. The containing of the extension within the indicated limits also facilitates a progressive increase of the width of the sipe towards the portion of maximum width, so as to promote the extractability of the tyre from the mould at the end of vulcanisation.

Preferably, the first area extends to a depth comprised between 3 mm and 6 mm.

Preferably, W1 is less than 3 mm, preferably less than 2.5 mm, even more preferably less than 2.2 mm.

Preferably, W1 is greater than 0.6 mm.

Preferably, the second zone extends radially according to an amount at least equal to 25%, preferably at least equal to 30%, of the total depth of the circumferential sipe.

Preferably, the second zone extends radially according to an amount less than 80%, preferably less than 60%, of the total depth of the circumferential sipe.

Preferably, W2 is comprised between 10% and 30% of the total depth of the circumferential sipe.

A sipe is therefore obtained that is relatively slender, sufficiently extending in depth to give a long-lasting contribution to handling performance, promoting homogeneous behaviour of the performance of the tyre during wearing.

Preferably, W2 is greater than or equal to 1.5 times W1.

Preferably, W2 is greater than or equal to 1.5 times W3.

Preferably, W2 is less than or equal to 2.2 times W3.

Preferably, W2 is greater than or equal to 2 mm.

Preferably, W2 is less than or equal to 6 mm, preferably less than or equal to 5 mm.

Preferably, the bottom portion has an arched profile.

Preferably, the bottom portion has a semi-circular profile.

The parameters indicated above promote, singularly and particularly in combination with each other, a wave-like extension of the inner side walls of the sipe, improving the structural strength of the tread band thanks to the absence of discontinuities that could represent possible starting points of cracks or breaks.

Preferably, the second zone has a transition portion in which the side walls of the circumferential sipe diverge from one another from the first zone up to the portion of maximum width.

Preferably, in the transition portion the side walls of the circumferential sipe extend according to a convex arched profile towards the inside of the circumferential sipe.

Preferably, in the transition portion the side walls of the circumferential sipe extend according to an arched profile tangent to the same side walls in the portion of maximum width and in the first zone.

Preferably, in the transition portion the side walls of the circumferential sipe extend according to an arched profile having radius of curvature greater than or equal to 8 mm.

Preferably, in the transition portion the side walls of the circumferential sipe extend according to an arched profile having radius of curvature less than or equal to 35 mm.

Preferably, the side walls of the circumferential sipe at the transition portion diverge from one another going away from the first zone, according to an angle greater than or equal to 10°.

Preferably, the side walls of the circumferential sipe at the transition portion diverge from one another going away from the first zone, according to an angle less than or equal to 30°.

Preferably, in the second zone the side walls of the sipe converge towards the third zone up to a mutual distance apart not less than 80% of W1.

Preferably, the second zone has a joining portion in which the side walls of the circumferential sipe converge with one another towards the third zone.

Preferably, in the joining portion the side walls of the circumferential sipe extend according to a convex arched profile towards the inside of the circumferential sipe.

Preferably, in the joining portion the side walls of the circumferential sipe extend according to an arched profile tangent to the same side walls in the portion of maximum width and in the third zone.

Preferably, in the joining portion the side walls of the circumferential sipe extend according to an arched profile having radius of curvature greater than or equal to 10 mm.

Preferably, in the joining portion the side walls of the circumferential sipe extend according to an arched profile having radius of curvature less than or equal to 30 mm.

Preferably, the side walls of the circumferential sipe at the joining portion converge with one another towards the third zone, according to an angle greater than or equal to 8°.

Preferably, the side walls of the circumferential sipe at the joining portion converge with one another towards the third zone, according to an angle less than or equal to 25°.

Preferably, close to the portion of maximum width the side walls of the circumferential sipe extend according to a concave arched profile towards the inside of the circumferential sipe.

Preferably, close to the portion of maximum width the side walls of the circumferential sipe extend according to an arched profile tangent to the same side walls in the transition portion and in the joining portion.

Preferably, close to the portion of maximum width the side walls of the circumferential sipe extend according to an arched profile having radius of curvature greater than or equal to 10.

Preferably, close to the portion of maximum width the side walls of the circumferential sipe extend according to an arched profile having radius of curvature less than or equal to 18 mm.

Preferably, the first zone has a mouth portion in which the side walls have respective apex portions that converge with one another from the radially outer surface of the tread band.

Preferably, the mouth portion has a depth less than 50% of the radial depth of the first zone.

Preferably, the mouth portion has a radial depth less than 20% of the total depth of the circumferential sipe.

Preferably, the tread pattern also comprises at least one circumferential groove delimited between respective opposite side walls, mutually spaced apart according to an amount greater than 3 mm.

Preferably, the opposite side walls of said groove are mutually interconnected, on the opposite side to the radially outer surface, by means of a base portion defining a maximum depth of the groove.

Preferably, said groove has at least one indicator of tread consumption projecting from said base portion and defining a residual depth less than the maximum depth of the groove.

Preferably, the bottom portion of the circumferential sipe is arranged at a lesser depth than the maximum depth of said groove.

Preferably, the bottom portion of the circumferential sipe is arranged at a lesser depth than the residual depth defined by the consumption indicator.

Preferably, the bottom portion of the circumferential sipe is arranged at a depth less than or equal to 85% of the residual depth defined by the consumption indicator.

Preferably, the bottom portion of the circumferential sipe is arranged at a depth greater than or equal to 70% of the residual depth defined by the consumption indicator.

The containing of the depth of the sipe to suitable values makes it possible to obtain better smoothness of movement in the initial stages of the life cycle of the tread band. As consumption progresses beyond the portion of maximum width, it is possible to increase the depth of the sipes by means of removal of material from the third zone, to restore optimal handling performance of the tyre until the end of the life cycle without significantly penalising smoothness of travel.

Preferably, said at least one groove extends according to a substantially continuous extension along the entire circumferential extension of the tread band, an axial distance from said at least one circumferential sipe.

### BRIEF DESCRIPTION OF THE DRAWINGS

- Fig. 1 shows a radial section view of a tyre according to the present invention;
- Fig. 2 shows a plan view of a tread portion of the tyre of figure 1;
- Fig. 3 shows an enlarged detail of figure 1, in which geometric and dimensional characteristics of a circumferential sipe are highlighted.

### DETAILED DESCRIPTION OF EMBODIMENTS OF THE INVENTION

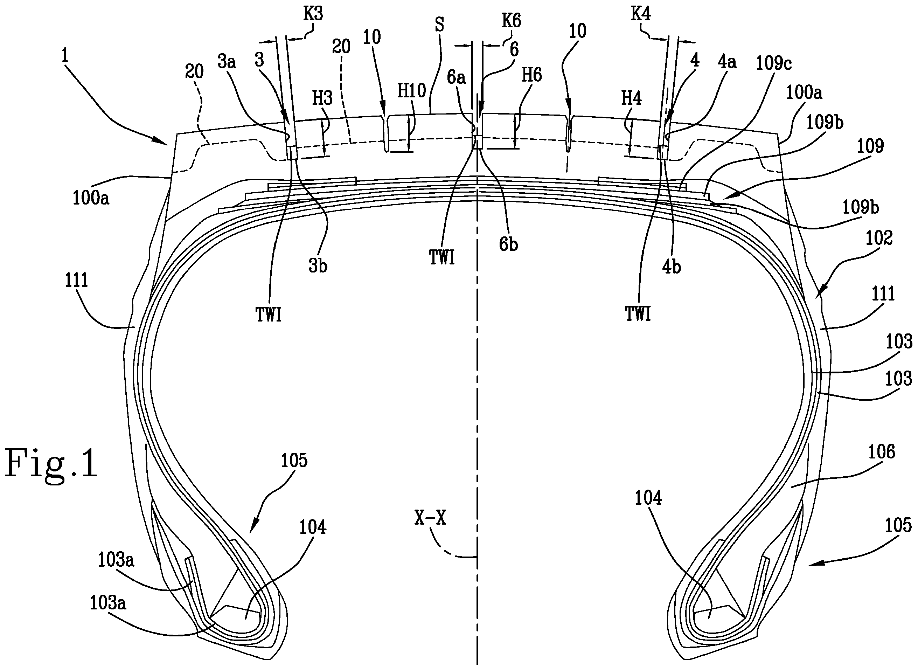

In figure 1, reference numeral 1 wholly indicates a tyre for vehicle wheels according to the present invention, in particular a tyre 1 intended for wheels, driving or steering, of a heavy duty vehicle.

The tyre 1 comprises a carcass structure 102, including at least one carcass ply 103, preferably two plies, formed from typically metallic reinforcing cords, incorporated in an elastomeric matrix.

The carcass ply 103 has opposite end flaps 103a engaged with respective rims 104. The latter are arranged in the zones 105 of the tyre 1 usually identified with the name "beads".

On the outer perimeter edge of the rims 104, an elastomeric filler 106 is applied that occupies the space defined between the carcass ply 103 and the respective end flap 103a of the carcass ply 103. The rims 104 keep the tyre 1 properly fixed to an anchoring seat suitably foreseen in the rim of the wheel, thus preventing the bead 105 from coming out from such a seat during operation.

At the beads 105 there can be specific reinforcing structures (not illustrated) having the function of improving the transmission of torque to the tyre 1.

In a radially outer position with respect to the carcass structure 102 a belt structure 109 is associated preferably comprising many belt layers (in the specific example illustrated three layers 109a, 109b 109c are shown) arranged radially juxtaposed over one another and having typically metallic reinforcing cords having crossed orientation and/or substantially parallel to the direction of circumferential extension of the tyre 1.

In radially outer position with respect to the belt structure 109 a tread band 2 is applied, also made of elastomeric material.

On the side surfaces of the carcass structure 102, each extending from one of the opposite side edges 100a of the tread band 2, up to the respective bead 105, respective sidewalls 111 made of elastomeric material are also applied.

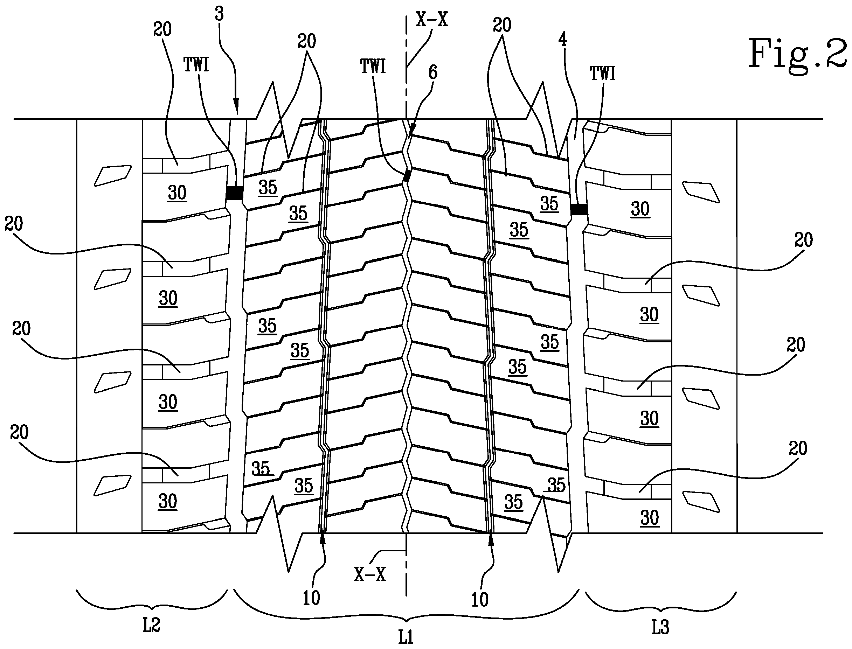

With reference to figures 1-2, the tread band 2 comprises a central portion L1 and two shoulder portions L2; L3.

The central portion L1, arranged astride of the equatorial plane X-X, is visibly separated from the shoulder portions L2; L3 by means of two circumferential grooves 3, 4.

Additionally or alternatively, at least one central circumferential groove 6 is provided extending circumferentially, preferably arranged astride of the equatorial plane X-X of the tyre 1.

The circumferential grooves 3, 4 and/or 6 are mainly provided to ensure drainage of water from the footprint, in particular during travel in a straight line of the tyre 1 itself.

For this purpose, the circumferential grooves 3, 4 and/or 6 preferably each have a respective width K3, K4, K6 greater than 3 mm, in any case less than 20 mm, preferably less than 15 mm, for example equal to 7 mm. The width of each circumferential groove 3, 4, 6 is defined between respective side walls 3a that, on the opposite side to the radially outer surface S of the tread band 2, are mutually interconnected by means of a base portion 3b, 4b, 6b that defines a maximum depth H3, H4, H6 of the groove 3, 4, 6.

Advantageously, such a maximum depth H3, H4, H6 is greater than 10 mm, preferably greater than 15, in any case less than 30 mm, for example equal to 22 mm. The choice to provide the first circumferential grooves 3, 4 and/or 6 with a great depth makes it possible to obtain good characteristics, preferably for the entire life cycle of the tread band 2.

In one or more of the grooves 3, 4, 6, at least one tread wear indicator TWI can be arranged, projecting radially from the base portion 3b, 4b, 6b to define a residual depth less than the maximum depth H3, H4, H6 of the groove 3, 4, 6. In a *per se* known way, the tread wear indicator TWI can be used as reference to detect, possibly with the help of suitable measuring tools, the state of wear of the tread band 2.

The tread band 2 also has one or more circumferential sipes 10, axially spaced from the circumferential grooves 3, 4 and/or 6. In the illustrated example, two circumferential sipes 10 are provided, preferably arranged in the central portion LI. Every circumferential sipe 10 is arranged in axially inner position with respect to one of the first circumferential grooves 3, 4. Preferably, every circumferential sipe 10 is substantially equidistant between the respective groove 3, 4 and the central groove 6. Advantageously, the circumferential sipes 10 can have a total radial depth H10 greater than 10 mm, preferably greater than 15, in any case less than 30 mm, for example equal to 16 mm.

The choice of providing the circumferential sipes 10 with a great depth makes it possible to obtain good characteristics, and protract such a functionality of the sipe 10 for a substantial portion, indicatively over half, of the useful life cycle of the tread band 2.

The circumferential sipes 10, as well as the grooves 3, 4, and/or 6 can circumferentially extend in a straight or scattered manner, for example to increase the traction of the tread band 2 in the direction of forward movement of the tyre 1.

However, it is preferably foreseen for the circumferential sipes 10, as well as the circumferential grooves 3, 4, and/or 6, to have a substantially continuous extension, in other words without interruptions that overall engage more than 10% of the circumferential extension of the tread band 2.

In the tread band 2 it is possible to define transversal notches 20, suitably distributed along the axial and circumferential extension according to a desired so-called tread pattern, to delimit, in cooperation with the grooves 3, 4, 6 and the circumferential sipes 10, a plurality of shoulder blocks 30 and a plurality of central blocks 35.

Figure 1 indicatively represents, with a broken line, the bottom profile of the transversal notches 20, which can have a constant or variable depth along their extension.

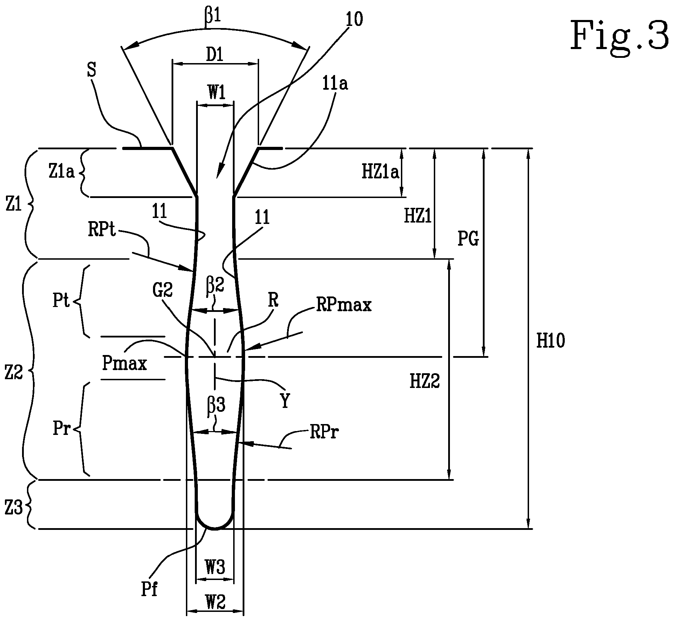

With particular reference to figure 3, each of the circumferential sipes 10 is shaped and sized so as to have, going radially away from the radially outer surface S of the tread band 2, a profile comprising a first zone Z1, a second zone Z2 radially inner with respect to the first zone Z1, and a third zone Z3 radially inner with respect to the second zone Z2.

In the first zone Z1, close to the radially outer surface S, mutually facing side walls 11 of the sipe 10 are substantially parallel to one another. The first zone Z1 has a minimum section width W1.

In the second zone Z2, the side walls 11 of the circumferential sipe 10 diverge from one another up to a portion of maximum width Pmax in which the sipe 10 has a maximum section width W2.

The third zone Z3 has its own maximum width W3, less than W2.

In the third zone Z3, the side walls 11 of the circumferential sipe 10 join with a bottom portion Pf, preferably having an arched profile, defining the total depth H10 of the sipe 10.

In a preferred embodiment, the bottom portion Pf has a semi-circular profile.

Preferably, the minimum width W1 is selected so that, during the use of the tyre 1, a mutual contact of the side walls 11 is promoted due to the stresses transmitted at the footprint.

It is preferably foreseen for the minimum width W1 to be indicatively comprised between 0.6 and 3 mm, preferably less than 2.5 mm, even more preferably less than 2.2 mm.

The first zone Z1 extends radially away from the radially outer surface S up to a depth

HZ1 indicatively comprised between 3 mm and 6 mm, and preferably comprised between 25% and 40% of the total depth H10 of the circumferential sipe 10.

The side walls 11 can be substantially parallel to one another for the entire extension of the first zone Z1. Alternatively, as exemplified in figure 3, the side walls 11 in the first zone Z1 can have apex portions 11a that converge with one another from the radially outer surface S of the tread band 2, to define a mouth portion Z1a of the first zone Z1. Preferably, the apex portions 11a converge with one another according to an angle β1 comprised between 45° and 70°, preferably equal to 60°.

Preferably, the apex portions 11a converge with one another from a mutual distance D1 on the radially outer surface S indicatively between 2.5 mm and 4 mm, for example equal to 3.5 mm. The mouth portion Z1a preferably has a radial depth HZ1a less than 20% of the total depth H10 of the circumferential sipe 10. The radial depth HZla of the mouth portion Z1a is preferably less than 50% of the radial depth HZ1 of the first zone Z1.

Preferably, the second zone Z2 extends radially according to an amount HZ2 comprised between 25% and 80%, more preferably comprised between 30% and 60%, of the total depth H10 of the circumferential sipe 10.

Preferably, the portion of maximum width Pmax is arranged roughly at the half-way point of the total depth H10 of the circumferential sipe 10, with the geometric centre G2 lying at a depth PG indicatively comprised between 40% and 60% of the total depth H10.

In the examples illustrated, the portion of maximum width Pmax has zero radial extent, and is thus defined along the side walls 11 by two points at maximum distance apart, respectively equidistant from the radially outer surface S. In this case, the geometric centre G2 of the portion of maximum width Pmax lies on the segment R that joins the two points of maximum distance.

Alternatively, the portion of maximum width Pmax can extend radially, preferably according to an amount not greater than 25% of the total depth H10 of the sipe 10. In this case, the geometric centre G2 of the portion of maximum width Pmax can be identified with analytical methods as barycentre of the flat figure defined by the portion of radial section in which the mutually facing side walls 11 of the circumferential sipe 10 keep the mutual maximum distance apart W2.

The ratio between the maximum section width W2 and the first minimum section width W1 is greater than 1 and equal to or less than 2.

Moreover, the maximum section width W2 is preferably comprised between 10% and 30% of the total depth H10 of the circumferential sipe 10.

Preferably, the maximum section width W2 is greater than or equal to 1.5 times the minimum width W1. In some preferred examples, the maximum section width W2 is comprised between 1.5 and 2.2 times the maximum width W3 of the third zone Z3. The maximum section width W2 can be greater than 1.2 mm, preferably less than 6 mm, preferably comprised between 2 and 5 mm.

Preferably, in the second zone Z2 it is possible to identify a transition zone Pt and/or a joining zone Pr, respectively in radially outer position and in radially inner position with respect to the portion of maximum width Pmax.

In at least one of said transition portion Pt and joining portion Pr, preferably in both, the side walls 11 of the circumferential sipe 10 preferably extend according to an at least partially convex arched profile towards the inside of the circumferential sipe 10. In the portion of maximum width Pmax it can be foreseen for the side walls 11 of the circumferential sipe 10 to extend according to an arched profile in turn concave towards the inside of the circumferential sipe 10, preferably having radius of curvature comprised between 10 mm and 18 mm, for example equal to 14 mm. Preferably, the arched profile of every side wall in the zone of maximum width is defined by an arc of circle RPmax.

Preferably, in the transition zone Pt the convex arched profile of the side walls 11 is tangent to the same side walls 11 in the first zone Z1, and to their concave arched profile in the portion of maximum width Pmax.

In the joining zone Pr the convex arched profile of the side walls 11 is preferably tangent to the same side walls 11 in the third zone Z3, and to their concave arched profile in the portion of maximum width Pmax.

In the transition portion Pt the side walls 11 of the circumferential sipe 10 diverge from one another from the first zone Z1 towards the portion of maximum width Pmax, preferably according to an angle β2 comprised between 10° and 30°, for example equal to 14°, in the point of tangency with the concave arched profile defining the side walls 11 in the portion of maximum width Pmax.

The arched profile of each of the side walls 11 in the transition portion Pt can be defined by an arc of circle, and preferably has a radius of curvature RPt comprised between 15 mm and 35 mm, for example equal to 25 mm.

In the joining portion Pr the side walls 11 of the circumferential sipe 10 converge with one another from the portion of maximum width Pmax towards the third zone Z3 preferably according to an angle β3 comprised between 8° and 25°, for example equal to 12° in the point of tangency with the side walls 11 in the third zone Z3. In said point of tangency, which identifies the transition between the second zone Z2 and the third zone Z3, the mutual distance apart of the side walls 11 is greater than or equal to 80% of the minimum width W1.

The arched profile of each of the side walls 11 in the joining portion Pr can be defined by an arc of circle, having radius RPr preferably less than or equal to the radius RPt of the arched profile that defines the transition portion Pt. For example, the radius of curvature RPr in the joining portion Pr can be comprised between 10 mm and 30 mm, for example equal to 20 mm.

## Claims

1. Tyre for vehicle wheels, comprising a tread band (2) having a radially outer surface (S) on which a tread pattern is formed comprising:
at least one circumferential sipe (10) extending according to a substantially continuous extension;
wherein in a radial section of the tyre (1) said circumferential sipe (10) has, starting from the radially outer surface (S) of the tread band (2), a profile comprising:
a first zone (Z1) close to said radially outer surface (S), comprising side walls (11) facing one another and substantially parallel, and having a minimum width W1;
a second zone (Z2), radially inner with respect to the first zone (Z1), having a portion (Pt) in which the facing side walls (11) diverge from one another, and a portion of maximum width (Pmax) in which the sipe (10) has a maximum section width W2; and
a third zone (Z3) arranged radially inner with respect to the second zone (Z2) and having a maximum width W3;
wherein in the third zone (Z3) the facing side walls (11) of the circumferential sipe (10) join with a bottom portion (Pf) defining a total depth (H10) of the sipe (10) equal to or greater than 10 mm;
wherein W3 is less than W2;
wherein the ratio between W2 and W1 is greater than 1 and equal to or less than 2;
wherein a geometric centre (G2) of said portion of maximum width (Pmax) lies at a depth (PG) greater than 40% and less than 60% of the total depth (H10) of the sipe (10),
wherein the second zone (Z2) has a joining portion (Pr) in which the side walls (11) of the circumferential sipe (10) converge with one another towards the third zone (Z3), and
wherein the portion of maximum width (Pmax) extends radially according to an amount not greater than 25% of the total depth (H10) of the sipe (10).

2. Tyre according to the preceding claim, wherein the first zone (Z1) extends from the radially outer surface of the tread band (2) up to a depth (HZ1) comprised between 25% and 40% of the total depth (H10) of the circumferential sipe (10).

3. Tyre according to one or more of the preceding claims, wherein W2 is comprised between 10% and 30% of the total depth (H10) of the circumferential sipe (10).

4. Tyre according to one or more of the preceding claims, wherein the second zone (Z2) has a transition portion (Pt) in which the side walls (11) of the circumferential sipe (10) diverge from one another from the first zone (Z1) up to the portion of maximum width (Pmax).

5. Tyre according to claim 5, wherein in the transition portion (Pt) the side walls (11) of the circumferential sipe (10) extend according to a convex arched profile towards the inside of the circumferential sipe (10).

6. Tyre according to claims 4 or 5, wherein in the transition portion (Pt) the side walls (11) of the circumferential sipe (10) extend according to an arched profile tangent to the same side walls (11) in the portion of maximum width (Pmax) and in the first zone (Z1).

7. Tyre according to one or more of claims 4 to 6, wherein the side walls (11) of the circumferential sipe (10) at the transition portion (Pt) diverge from one another going away from the first zone (Z1), according to an angle (β2) comprised between 10° and 30°.

8. Tyre according to one or more of the preceding claims, wherein in the second zone (Z2) the side walls (11) of the sipe (10) converge towards the third zone (Z3) up to a mutual distance apart not less than 80% of W1.

9. Tyre according to one or more of the preceding claims, wherein in the joining portion (Pr) the side walls (11) of the circumferential sipe (10) extend according to a convex arched profile towards the inside of the circumferential sipe (10).

10. Tyre according to one or more of the preceding claims, wherein in the joining portion (Pr) the side walls (11) of the circumferential sipe (10) extend according to an arched profile tangent to the same side walls (11) in the portion of maximum width (Pmax) and in the third zone (Z3).

11. Tyre according to one or more of the preceding claims, wherein the side walls (11) of the circumferential sipe (10) at the joining portion (Pr) converge with one another towards the third zone, preferably according to an angle comprised between 8° and 25°.

12. Tyre according to one or more of the preceding claims, wherein in the vicinity of the portion of maximum width (Pmax) the side walls (11) of the circumferential sipe (10) extend according to a concave arched profile towards the inside of the circumferential sipe (10).

13. Tyre according to one or more of the preceding claims, wherein in the second zone (Z2) the side walls (11) of the circumferential sipe (10) extend according to an arched profile tangent to the same side walls (11) in the transition portion (Pt) and in the joining portion (Pr).

14. Tyre according to one or more of the preceding claims, wherein the first zone (Z1) has a mouth portion (Z1a) in which the side walls (11) have respective apex portions (11a) that converge with one another from the radially outer surface (S) of the tread band (2).

15. Tyre according to one or more of the preceding claims, wherein the tread pattern also comprises at least one circumferential groove (3, 4, 6) delimited between respective opposite side walls (3a, 4a, 6a) that are mutually interconnected, on the opposite side to the radially outer surface (S), by means of a base portion defining a maximum depth of the groove, the bottom portion (Pf) of the circumferential sipe (10) being arranged at a lesser depth than the maximum depth of said groove (3, 4, 6).

16. Tyre according to one or more of the preceding claims, wherein W2 is greater than or equal to 1.5 times W3.

17. Tyre according to one or more of the preceding claims, wherein W2 is less than or equal to 2.2 times W3.

## Patentansprüche

1. Fahrzeugreifen, umfassend ein Laufstreifenband (2) mit einer radial äußeren Oberfläche (S), auf der eine Laufstreifenstruktur ausgeformt ist, umfassend:
mindestens einen umlaufenden Einschnitt (10), der gemäß einem im Wesentlichen kontinuierlichen Verlauf verläuft;
wobei in einem radialen Abschnitt des Reifens (1) der genannte umlaufende Einschnitt (10), ausgehend von der radial äußeren Oberfläche (S) des Laufstreifenbands (2), ein Profil aufweist, das Folgendes umfasst:
einen ersten Bereich (Z1) in der Nähe der radial äußeren Oberfläche (S), der einander gegenüberliegende und im Wesentlichen zueinander parallele Seitenwände (11) umfasst und eine Mindestbreite W1 aufweist;
einen im Verhältnis zu dem ersten Bereich (Z1) radial inneren zweiten Bereich (Z2), der einen Abschnitt (Pt), in dem die gegenüberliegenden Seitenwände (11) divergieren, und einen Abschnitt maximaler Breite (Pmax), in dem der Einschnitt (10) eine maximale Abschnittsbreite W2 aufweist, aufweist; und
einen im Verhältnis zu dem zweiten Bereich (Z2) radial innen angeordneten dritten Bereich (Z3) mit einer maximalen Breite W3;
wobei in dem dritten Bereich (Z3) die gegenüberliegenden Seitenwände (11) des umlaufenden Einschnitts (10) sich mit einem Bodenabschnitt (Pf) verbinden und so eine Gesamttiefe (H10) des Einschnitts (10) von 10 mm oder mehr definieren;
wobei W3 weniger als W2 beträgt;
wobei das Verhältnis zwischen W2 und W1 größer als 1 und gleich oder weniger als 2 ist;
wobei ein geometrischer Mittelpunkt (G2) des genannten Abschnitts maximaler Breite (Pmax) auf einer Tiefe (PG) von mehr als 40 % und weniger als 60 % der Gesamttiefe (H10) des Einschnitts (10) liegt;
wobei der zweite Bereich (Z2) einen Verbindungsabschnitt (Pr), in dem die Seitenwände (11) des umlaufenden Einschnitts (10) in Richtung des dritten Bereichs (Z3) konvergieren, umfasst, und
wobei der Abschnitt maximaler Breite (Pmax) radial in einem Umfang von nicht mehr als 25 % der Gesamttiefe (H10) des Einschnitts (10) verläuft.

2. Fahrzeugreifen nach dem vorangegangenen Anspruch, bei dem der erste Bereich (Z1) von der radial äußeren Oberfläche des Laufstreifenbands (2) bis zu einer Tiefe (HZ1) zwischen 25 % und 40 % der Gesamttiefe (H10) des umlaufenden Einschnitts (10) verläuft.

3. Fahrzeugreifen nach einem oder mehreren der vorangegangenen Ansprüche, bei dem W2 zwischen 10 % und 30 % der Gesamttiefe (H10) des umlaufenden Einschnitts (10) liegt.

4. Fahrzeugreifen nach einem oder mehreren der vorangegangenen Ansprüche, bei dem der zweite Bereich (Z2) einen Übergangsabschnitt (Pt) aufweist, in dem die Seitenwände (11) des umlaufenden Einschnitts (10) von dem ersten Bereich (Z1) bis zu dem Abschnitt maximaler Breite (Pmax) divergieren.

5. Fahrzeugreifen nach Anspruch 5, bei dem in dem Übergangsabschnitt (Pt) die Seitenwände (11) des umlaufenden Einschnitts (10) gemäß einem konvexen gewölbten Profil in Richtung der Innenseite des umlaufenden Einschnitts (10) verlaufen.

6. Fahrzeugreifen nach Anspruch 4 oder 5, bei dem in dem Übergangsabschnitt (Pt) die Seitenwände (11) des umlaufenden Einschnitts (10) gemäß einem gewölbten Profil tangential zu den gleichen Seitenwänden (11) in dem Abschnitt maximaler Breite (Pmax) und in dem ersten Bereich (Z1) verlaufen.

7. Fahrzeugreifen nach einem oder mehreren der Ansprüche 4 bis 6, bei dem die Seitenwände (11) des umlaufenden Einschnitts (10) am Übergangsabschnitt (Pt) divergieren und sich von dem ersten Bereich (Z1) in einem Winkel (β2) zwischen 10° und 30° wegbewegen.

8. Fahrzeugreifen nach einem oder mehreren der vorangegangenen Ansprüche, bei dem die Seitenwände (11) des Einschnitts (10) in dem zweiten Bereich (Z2) in Richtung des dritten Bereichs (Z3) bis zu einem Abstand von nicht weniger als 80 % von W1 zueinander konvergieren.

9. Fahrzeugreifen nach einem oder mehreren der vorangegangenen Ansprüche, bei dem in dem Verbindungsabschnitt (Pr) die Seitenwände (11) des umlaufenden Einschnitts (10) gemäß eines konvexen gewölbten Profils in Richtung der Innenseite des umlaufenden Einschnitts (10) verlaufen.

10. Fahrzeugreifen nach einem oder mehreren der vorangegangenen Ansprüche, bei dem in dem Verbindungsabschnitt (Pr) die Seitenwände (11) des umlaufenden Einschnitts (10) gemäß eines gewölbten Profils tangential zu den gleichen Seitenwänden (11) in dem Abschnitt maximaler Breite (Pmax) und in dem dritten Bereich (Z3) verlaufen.

11. Fahrzeugreifen nach einem oder mehreren der vorangegangenen Ansprüche, bei dem die Seitenwände (11) des umlaufenden Einschnitts (10) am Verbindungsabschnitt (P5) in Richtung des dritten Bereichs konvergieren, vorzugsweise in einem Winkel zwischen 8° und 25°.

12. Fahrzeugreifen nach einem oder mehreren der vorangegangenen Ansprüche, bei dem in der Nähe des Abschnitts maximaler Breite (Pmax) die Seitenwände (11) des umlaufenden Einschnitts (10) gemäß einem konkaven gewölbten Profil in Richtung der Innenseite des umlaufenden Einschnitts (10) verlaufen.

13. Fahrzeugreifen nach einem oder mehreren der vorangegangenen Ansprüche, bei dem in dem zweiten Bereich (Z2) die Seitenwände (11) des umlaufenden Einschnitts (10) gemäß einem gewölbten Profil tangential zu den gleichen Seitenwänden (11) im Übergangsabschnitt (Pt) und im Verbindungsabschnitt (Pr) verlaufen.

14. Fahrzeugreifen nach einem oder mehreren der vorangegangenen Ansprüche, bei dem der erste Bereich (Z1) einen Mündungsabschnitt (Z1a) aufweist, in dem die Seitenwände (11) jeweils Scheitelabschnitte (11a) aufweisen, die von der radial äußeren Oberfläche (S) des Laufstreifenbands (2) konvergieren.

15. Fahrzeugreifen nach einem oder mehreren der vorangegangenen Ansprüche, bei dem die Laufstreifenstruktur mindestens eine umlaufende Nut (3, 4, 6) umfasst, die zwischen entsprechenden gegenüberliegenden Seitenwänden (3a, 4a, 6a), die miteinander an der der radial äußeren Oberfläche (S) gegenüberliegenden Seite mittels eines eine maximale Tiefe der Nut definierenden Basisabschnitts verbunden sind, begrenzt ist, wobei der untere Abschnitt (Pf) des umlaufenden Einschnitts (10) auf einer geringeren Tiefe als die maximale Tiefe der genannten Nut (3, 4, 6) angeordnet ist.

16. Fahrzeugreifen nach einem oder mehreren der vorangegangenen Ansprüche, bei dem W2 größer oder gleich des Anderthalbfachen von W3 ist.

17. Fahrzeugreifen nach einem oder mehreren der vorangegangenen Ansprüche, bei dem W2 kleiner oder gleich des 2,2-Fachen von W3 ist.

## Revendications

1. Pneumatique pour roues de véhicules comprenant une bande de roulement (2) ayant une surface radialement externe (S) sur laquelle est formé un dessin de la bande de roulement, comprenant :
au moins une lamelle circonférentielle (10) s'étendant selon une extension essentiellement continue ;
dans laquelle une section radiale du pneumatique (1) ladite lamelle circonférentielle (10) a, en partant de la surface radialement externe (S) de la bande de roulement (2), un profil comprenant :
une première zone (Z1) proche de ladite surface radialement externe (S), comprenant des parois latérales (11) disposées l'une en face de l'autre et essentiellement parallèles entre elles et ayant une largeur minimale W1 ;
une deuxième zone (Z2), interne dans le sens radial par rapport à la première zone (Z1), ayant une portion (Pt) dans laquelle les parois latérales (11) opposées divergent entre elles, et une portion de largeur maximale (Pmax) dans laquelle la lamelle (10) a une largeur maximale de section W2 ; et
une troisième zone (Z3) radialement interne par rapport à la deuxième zone (Z2) et ayant une largeur maximale W3 ;
dans la troisième zone (Z3), les parois latérales (11) opposées de la lamelle circonférentielle (10) rejoignant une portion de fond (Pf) définissant la profondeur totale (H10) de la lamelle (10) comme supérieure ou égale à 10 mm ;
W3 étant inférieure à W2 ;
le rapport entre W2 et W1 étant supérieur à 1 et inférieur ou égal à 2 ;
avec un centre géométrique (02) de ladite portion d'une largeur maximale (Pmax) se trouvant à une profondeur (PG) supérieure à 40 % et inférieure à 60 % de la profondeur totale (H10) de la lamelle (10) ;
avec la deuxième zone (Z2) ayant une portion de jonction (Pr) dans laquelle les parois latérales (11) de la lamelle circonférentielle (10) convergent l'une vers l'autre en direction de la troisième zone (Z3) ; et
avec la portion de largeur maximale (Pmax) s'étendant dans le sens radial d'une mesure non supérieure à 25 % de la profondeur totale (H10) de la lamelle (10).

2. Pneumatique selon la revendication précédente, dans lequel la première zone (Z1) s'étend de la surface radialement externe de la bande de roulement (2) jusqu'à une profondeur (HZ1) comprise entre 25 % et 40 % de la profondeur totale (H10) de la lamelle circonférentielle (10).

3. Pneumatique selon une ou plusieurs des revendications précédentes, dans lequel W2 est comprise entre 10 % et 30 % de la profondeur totale (H10) de la lamelle circonférentielle (10).

4. Pneumatique selon une ou plusieurs des revendications précédentes, dans lequel la deuxième zone (Z2) a une portion de transition (Pt) dans laquelle les parois latérales (11) de la lamelle circonférentielle (10) divergent entre elles en partant de la première zone (Z1) jusqu'à la portion de largeur maximale (Pmax).

5. Pneumatique selon la revendication 5, dans lequel la portion de transition (Pt) des parois latérales (11) de la lamelle circonférentielle (10) s'étend selon un profil en arc convexe vers l'intérieur de la lamelle circonférentielle (10).

6. Pneumatique selon la revendication 4 ou 5, dans lequel, dans la portion de transition (Pt), les parois latérales (11) de la lamelle circonférentielle (10) s'étendent selon une tangente en arc vers lesdites parois latérales (11), dans la portion de largeur maximale (Pmax) et dans la première zone (Z1).

7. Pneumatique selon une ou plusieurs des revendications 4 à 6, dans lequel les parois latérales (11) de la lamelle circonférentielle (10) sur la portion de transition (Pt) divergent entre elles en s'éloignant de la première zone (Z1), selon un angle (β2) compris entre 10° et 30°.

8. Pneumatique selon une ou plusieurs des revendications précédentes dans lequel, dans la deuxième zone (Z2), les parois latérales (11) de la lamelle (10) convergent vers la troisième zone (Z3) jusqu'à une distance mutuelle non inférieure à 80 % de W1.

9. Pneumatique selon une ou plusieurs des revendications précédentes dans lequel, dans la portion de jonction (Pr), les parois latérales (11) de la lamelle circonférentielle (10) s'étendent selon un profil en arc convexe vers l'intérieur de la lamelle circonférentielle (10).

10. Pneumatique selon un ou plusieurs des revendications précédentes dans lequel, dans la portion de jonction (Pr), les parois latérales (11) de la lamelle circonférentielle (10) s'étendent selon une tangente en arc vers lesdites parois latérales (11) dans la portion de la largeur maximale (Pmax) et dans la troisième zone (Z3).

11. Pneumatique selon une ou plusieurs des revendications précédentes, dans lequel les parois latérales (11) de la lamelle circonférentielle (10) sur la portion de jonction (Pr) convergent entre elles vers la troisième zone, préférentiellement selon un angle compris entre 8° et 25°.

12. Pneumatique selon une ou plusieurs des revendications précédentes dans lequel, à proximité de la portion de largeur maximale (Pmax), les parois latérales (11) de la lamelle circonférentielle (10) s'étendent selon un profil en arc concave vers l'intérieur de la lamelle circonférentielle (10).

13. Pneumatique selon une ou plusieurs des revendications précédentes dans lequel, dans la deuxième zone (Z2), les parois latérales (11) de la lamelle circonférentielle (10) s'étendent selon une tangente en arc vers lesdites parois latérales (11) dans la portion de transition (Pt) et dans la portion de jonction (Pr).

14. Pneumatique selon une ou plusieurs des revendications précédentes, dans lequel la première zone (Z1) a une embouchure (Z1a) dans laquelle les parois latérales (11) ont des portions de sommet (11a) respectives convergeant entre elles à partir de la surface radialement externe (S) de la bande de roulement (2).

15. Pneumatique selon une ou plusieurs des revendications précédentes, dans lequel le dessin de la bande de roulement comprend au moins une rainure circonférentielle (3, 4, 6) délimitée entre les parois latérales opposées (3a, 4a, 6a) respectives et qui sont en interconnexion entre elles, sur le côté opposé à la surface radialement externe (S), au moyen d'une portion de base définissant une profondeur maximum de rainure, la partie du fond (Pf) de la lamelle circonférentielle (10) étant disposée à une profondeur inférieure à la profondeur maximale de ladite rainure (3, 4, 6).

16. Pneumatique selon une ou plusieurs des revendications précédentes, dans lequel W2 est supérieure ou égale à 1,5 fois W3.

17. Pneumatique selon une ou plusieurs des revendications précédentes, dans lequel W2 est inférieure ou égale à 2,2 fois W3.
